# EUROPEAN PATENT APPLICATION

(11) **EP 0 811 715 A1**
(43) Date of publication of application: **10.12.1997**
(21) Application number: 96903242.4
(22) Date of filing: 22.02.1996
(51) Int. Cl.: D06C 25/00, D06H 7/22, D06Q 1/00

(54) **SHEET MATERIAL WITH DECORATIVE PATTERN**

(30) Priority: 22.02.1995 JP 33743/95
(71) Applicant: Fujisawa, Mitsuo, Gifu-shi, Gifu 502 (JP)
(72) Inventor: Fujisawa, Mitsuo, Gifu-shi, Gifu 502 (JP)
(74) Representative: Weatherald, Keith Baynes
(86) International application number: JP9600439
(87) International publication number: WO9626311

(57) **Abstract**

A sheet material capable of forming various patterns and having a decorative pattern which enhances a decorative effect to enable increasing a purchasing desire of consumers. The sheet material comprises a sheet substrate (1a) of synthetic fiber, a patterned cut portion (2) which is formed on the sheet substrate (1a) by cutting a peripheral edge (2a) and cut holes (2b) in a pattern, a pattern recess (3) with relieved lines (3a) in a pattern on the sheet substrate (1a), and patterned color portions (4) with coating films (4a) which are colored in a pattern on one side of the sheet substrate (1a), the patterned cut portion (2) and patterned recess (3) being formed by means of an ultrasonic machine.

## Description

### Field of the Invention:

This invention generally relates to a fabric sheet piece to be incorporated in a garment, handkerchief, hat, etc. More particularly, this invention relates to an ornamental fabric sheet piece of multiple-type ornamentality to be incorporated in a garment or the like to improve the overall ornamentality and market value of such a product.

### Background Art:

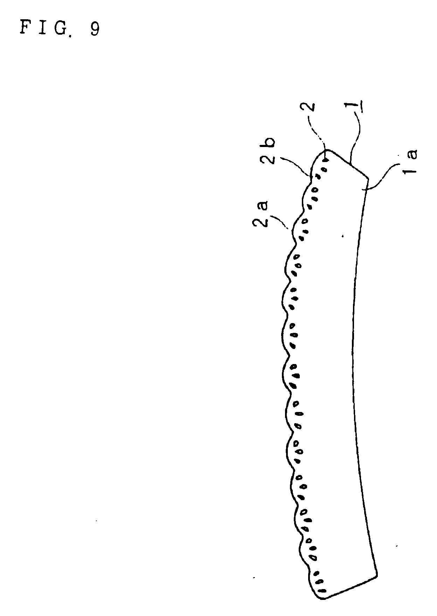

The lapels of women's and children's garments are often trimmed with ornamental cuts and/or provided with ornamental open cuts or openings such as shown in Fig. 9 (prior art).

In Fig. 9, a hem 2a of a fabric sheet or lapel portion 1 comprising a substrate fabric 1a is trimmed in a wavelike configuration, along which are provided ornamental openings 2b. The fabric sheet 1 having such an ornamental portion 2 (the wavy hem 2a and openings 2b) will provide the garment incorporating the fabric sheet with an additional overall attractiveness, thus value.

Such ornamentation may be provided by conventional heat cutting means (in case of synthetic textiles) or punching means.

Such ornamentation can more advantageously be provided by ultrasonic cutter means as disclosed in applicant's Japanese Patent Publication No. 3-42344 or Patent Laid-Open Publication No. 2-61171.

As such a multiple-type of ornamentation is growingly utilized on garments and others, consumers demand further decorative and sophisticated ornamentation. In order to satisfy such consumers' growing demands, dress designers may wish to provide richer varieties of ornamental cut shapes such as petals, flowers, hearts, stars, etc. Conventional cutting means alone cannot provide very sophisticated multiple decorations as designers wish to, due mainly to technical and cost restrictions.

Conventionally, other types of fabric ornamentation are also provided on garments and others, such as indention and color printing of patterns. Conventionally, pattern indention and color printing as well as the foregoing hem decoration and openings have been provided separately. No prior art has introduced an economically feasible technique to provide combinations of such ornamental features as sophisticated as those according to the present invention.

Accordingly, it is an object of the present invention to provide fabric sheets with combinations of such different types of ornamentation much less strenuously and more neatly. It is another object of the present invention to economically provide fabric sheets with more sophisticated and decorative appearances, which was not possible with conventional means due to a number of restrictions including high manufacturing cost.

### Summary of the Invention:

A fabric sheet to be incorporated into a garment, handkerchief, hat, shoes, etc. as defined in claim 1 has an ornamental cut portion comprising a decoratively cut hem and openings, and a color portion, so that they together present a very rich ornamental taste.

In another fabric sheet as defined in claim 2, the ornamental cut portion as defined in claim 1 is provided by ultrasonic cutter means. An ultrasonic cutter is capable of providing neater cut edges than conventional heat cutter means or punch-die means. It is an additional advantage that the cut edges provided by ultrasonic means are made frayless.

In a fabric sheet as defined in claim 3, an embroidery pattern is first provided on the substrate fabric with thermofusible fibers in a desired configuration. The thermofusible fibers of the embroidery pattern are then treated with ultrasonic means.

The ultrasonically treated thermofusible fiber portions become stably frayless. The ultrasonically cut hem of the fabric sheet need not be turned up and sewn to prevent fraying unlike conventionally processed fabric sheets.

Another fabric sheet as defined in claim 4 further has an ornamental indention portion having an attractively indented pattern thereon in addition to the ornamental cut portion and the color portion as described above, altogether providing a still more complicated and sophisticated multiple decoration.

Still another fabric sheet as defined in claim 5 has the color portion of claim 4 at least partially overlapping with the ornamental cut portion and/or the indention portion described above, providing a uniquely combined decorative pattern.

Another fabric sheet as defined in claim 6 has at least one of its ornamental cut portion and indention portion treated by ultrasonic cutter means, which can provide neater frayless cut edges than those of claims 4 and 5.

In still another fabric sheet as defined in claim 7, at least one of its ornamental cut portion and indention portion as defined in claim 4, 5 or 6 is embroidered with thermofusible fibers before it is put to treatment by ultrasonic means.

The thermofused cut edges are made neat and frayless. In case the fabric sheet hem is thermofused by ultrasonic means, it is not necessary to turn up and sew along the hem of the fabric sheet to prevent fraying.

A fabric sheet as defined in claim 8 has its ornamental color portion provided by paint means, providing further stabler frayless cuts than those defined in claims 1 to 7 when the paint is applied along the cutting portions, as the paint applied helps hold the relevant fibers together when it is dried.

The substrate fabric of claim 1, 2, 3, 4, 5, 6, 7 or 8 preferably and advantageously includes a sufficiant amount of thermofusible fibers. Such a fabric sheet as defined in claim 9 comprising a thermofusible substrate fabric is especially suitable for ultrasonic treatment and is capable of providing exceptionally neat and frayless cut edges.

### Brief Description of the Drawings:

FIG.1 is a plan view of a fabric sheet according to an embodiment of the present invention;
FIG.2 is a sectional view taken along A-A of FIG.1;
FIG.3 is a perspective view of a utilizable ultrasonic cutter;
FIG.4 is a perspective view of a utilizable painting device;
FIG.5 is a plan view of a fabric sheet according to another embodiment of the present invention;
FIG.6 is a sectional view taken along B-B of FIG.5;
FIG.7 is a plan view of another fabric sheet according to another embodiment of the present invention;
FIG.8 is a sectional view taken along C-C of FIG.7; and
FIG.9 is a plan view of a conventional lapel having a conventional decorative portion.

Throughout the drawings: numeral 1 is "fabric sheet"; 1a is "substrate fabric"; 2 is "ornamental cut portion"; 2a is "ornamental hem"; 2b is "ornamental opening"; 3 is "ornamental indention portion"; 3a is "ornamental indention line"; 3b is "ornamental indention circle"; 4 is "ornamental color portion"; 4a is "paint"; and 5 is "embroidery."

### Detailed Description of Preferred Embodiments:

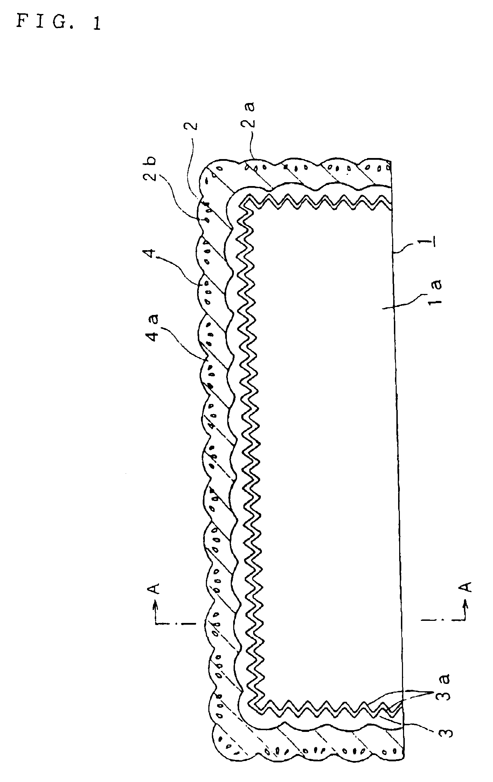

First, the present invention is further described hereunder utilizing the accompanying figures 1-4.

A lapel portion or fabric sheet piece 1 to be incorporated in a dress (not shown) is prepared of a substrate fabric 1a of thermofusible material such as polyester, having an ornamental cut portion 2, ornamental indention portion 3 and color portion 4. The ornamental cut portion 2 comprises a wavy hem 2a and ornamental openings 2b. The ornamental indention portion 3 includes indented zigzag lines 3a. The ornamental color portion 4 includes a paint layer 4a.

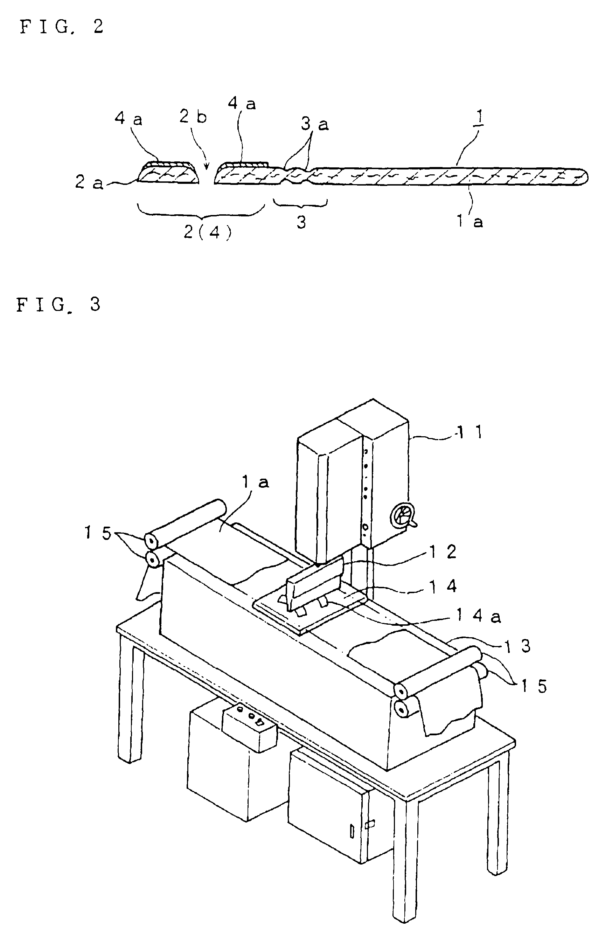

The ornamental cut portion 2, indention portion 3 and color portion 4 are further described hereafter. The ornamental cut portion 2 and indention portion 3 may be prepared by using ultrasonic cutter means such as disclosed in the inventor's Japanese Patent Publication No. 3-42344 or Publication Laid-Open No. 2-61171 such as shown in Fig. 3.

An ultrasonic cutter 11 utilizable for the present invention includes a vibration generator 12 (generally called "ultrasonic horn"), a work table 13, and a design plate 14 having blade means 14a thereon. The ultrasonic vibration generator 12 is provided with a vertical metal plate such as an aluminum plate whose lower end is given a desired configuration.

A substrate fabric 1a is run in the machine direction on the work table 13 between the metal plate and the blade means 14a by roller means 15 provided on the work table 13.

Heat sufficient to melt and cut the fibers of a substrate fabric 1a is generated between the metal plate and the blade means 14a by the ultrasonic vibrations provided by the vibration generator 12, which thermally treats the substrate fabric 1a run in the machine direction between the vertical metal plate and blade means 14a. Thus a desired pattern configuration of ornamental cut portion 2 is provided on the substrate fabric 1a.

The ornamental indention portion 3 including indention lines 3a can be provided also with the ultrasonic cutter 11. This time the gap between the blade means 14a and the vertical metal plate is adjusted such that the substrate fabric 1a is not cut through.

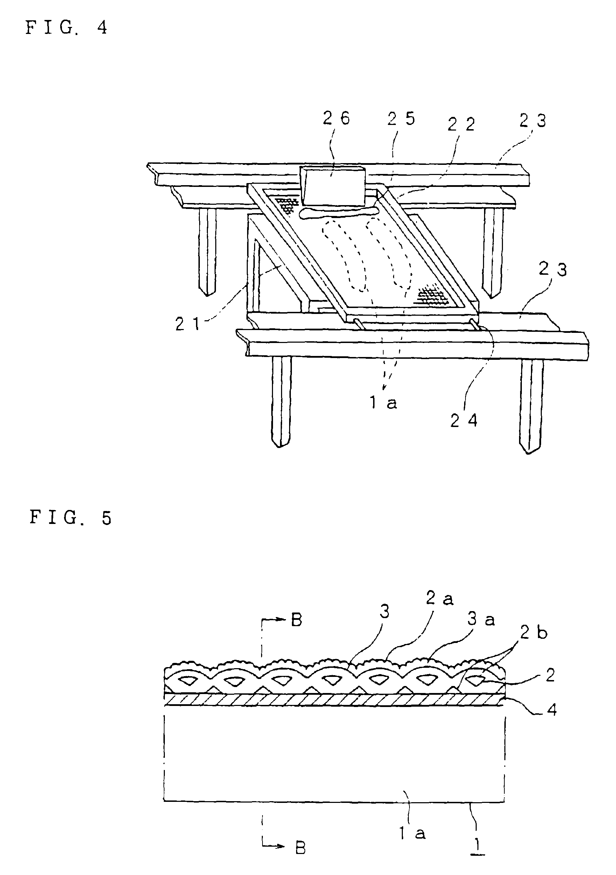

The ornamental color portion 4 can be provided by conventional screen printing means, for example, such as shown in Fig. 4, to be described in the following.

The substrate fabric 1a may be color printed by conventional offset printing means. In an embodiment, the substrate fabric 1a is placed on a table 21, over which is placed a design screen 22 having an appropriate size mesh (about 300 - 500 mesh). The screen 22 is pretreated by coating means and given a predesigned coated configuration. The design screen 22 is supported on frame means 23 and positionally adjusted by positioning means 24. Numeral "25" indicates appropriately viscous and adhesive color paint and numeral "26" indicates a paint spreader.

An appropriate amount of paint 25 is spread with the spreader 26 on the design screen 22 with appropriate pressure. The paint 25 passes the screen mesh 22 onto the substrate fabric 1a of the lapel portion 1 in the predesigned pattern (not shown). The coating on the screen 22 prevents entry of the paint 25 therethrough. The substrate fabric 1a having the designed paint pattern thereon is then dried by dryer means (not shown) and a designed paint layer 4a is provided on the lapel portion 1.

The paint may be selected from those that do not chemically affect the substrate fabric 1a or get washed away easily. Such an appropriate paint may be an acrylic or polyurethane paint. 30 to 60 wt.% of water content will be appropriate. Appropriate temperature for drying will be around 150 °C and appropriate drying time may be 2 - 3 minutes. Other types of paint and treatment conditions may be used as desired.

For multiple color printing, this procedure is repeated as desired with a plurality of color paints. A plurality of differently designed coated screens 22 may be used for providing a sophisticated color design on the fabric sheet 1.

After all those treatments, a substrate fabric 1a will have an ornamental cut portion 2 comprising a designed hem 2a and openings 2b, an ornamental indention portion 3 comprising designed indention lines 3a and circles 3b, and an ornamental color portion 4 comprising a designed color paint layer 4a. The ornamental cut portion 2 and indention portion 3 may be provided by ultrasonic means 11.

It is possible for the present invention to easily provide a very sophisticated combination of ornamentation comprising an ornamental cut portion 2, indention portion 3 and color portion 4, which was not practiced with prior art due mainly to cost and technical reasons. Fabric sheets treated as such can provide an exceptionally rich ornamentation and will promote sale of the garments incorporating those fabric sheets.

An ultrasonically treated fabric sheet 1, especially when it is made of thermofusible synthetic material, will not fray from the hem or openings according to the present invention, and will not deform, even when it is worn long or washed repeatedly.

The paint applied onto a substrate fabric 1a partially permeate the substrate fabric 1a and will form a hardened paint matrix comprising the surface paint film 4a and the permeated portion of the paint (not shown), firmly holding the relevant fibers together. The paint may additionally be applied from the back side of the substrate fabric 1a to increase its fiber holding power. The paint may also include an appropriate amount of adhesive to further increase its fiber holding power.

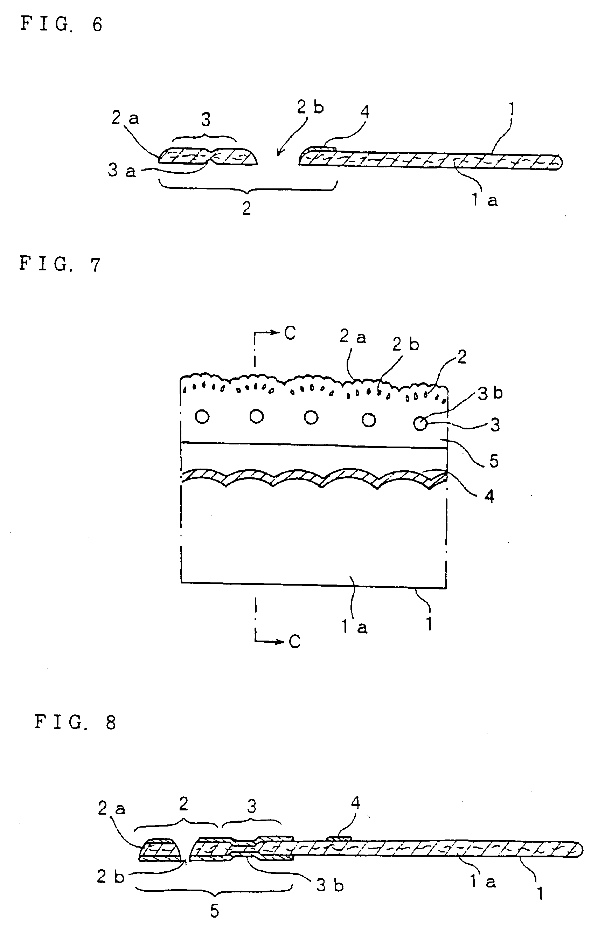

In an embodiment, the color portion 4 is provided overlapping with the ornamental cut portion 2. In another embodiment as shown in Figs. 5 and 6, the color portion 4 may be provided along the inner edge portion of the ornamental cut portion 2.

In another embodiment as shown in Figs. 7 and 8, the color portion 4 may be provided away from the ornamental portion 2 and the indention portion 3.

In an embodiment, when the substrate fabric 1a is non-thermofusible, an embroidery pattern is provided with thermofusible fiber material on the substrate fabric 1a, which is ultrasonically treated to provide an indention portion 3 including indented circles 3b. The ornamental hem of the substrate fabric 1a may also be provided by embroidery means so that the cut hem may become firmly frayless and neat.

The substrate fabric 1a can be provided with an ornamental cut portion 2 and an indention portion 3 in a single ultrasonic treatment.

An embroidery portion 5 including at least part of the ornamental cut portion 2 and indention portion 3 provides frayless cut edges even when the substrate fabric 1a is natural material such as cotton.

The ornamental cut portion 2 and the indention portion 3 having indention lines 3a and circles 3b can be provided in a single ultrasonic treatment. A color portion 4 may be provided over the ornamental cut portion 2 and/or indention portion 3, or away from them, or partially overlapping with them.

As described, the substrate fabric 1a can be natural material or synthetic material, or a blend of natural fibers and synthetic fibers. The substrate fabric 1a may be a nonwoven fabric, synthetic resin sheet, natural resin sheet, etc.

Conventional heat press cut means or punch press cut means can be used to provide the ornamental cut portion 2 and indention portion 3 instead of an ultrasonic cutter machine, if so desired.

The color portion 4 may be provided by another printing means such as spray means, soaking means, brushing means, etc. Paints can be replaced with dye materials.

Besides incorporating into a lapel, a fabric sheet of the present invention can be incorporated in other portions of garments such as a cuff. The present invention can also be incorporated into T-shirts, sports shirts, caps, sandals, slippers, handkerchiefs, neckerchiefs, as well as sofas and other accessories.

### Industrial Utility:

As described above, a fabric sheet according to the present invention can be incorporated into a garment, handkerchief, hat, shoes, etc. The fabric sheet as defined in claim 1 has an ornamental cut portion comprising a decoratively cut hem and openings, and a color portion, together providing the product incorporating the fabric sheet with a rich overall ornamental taste.

The ornamental cut portion of the fabric sheet as defined in claim 2 is provided by ultrasonic cutter means. Ultrasonic cutter means is capable of providing neat and frayless cut edges. The fabric sheet is very durable against wear and washing.

The embroidery pattern in the fabric sheet as defined in claim 3 is first provided on a substrate fabric with thermofusible fibers in a desired configuration along the cutting edges of the ornamental cut portion. The thermofusible fibers on the embroidery pattern are then treated with ultrasonic means. The fabric sheet provides a very decorative and sophisticated appearance. The ultrasonically treated fiber portions become stably frayless, and the ultrasonically cut hem of the fabric sheet need not be turned up and sewn to prevent fraying unlike conventionally processed fabric sheets.

The fabric sheet as defined in claim 4 further has an ornamental indention portion having an indented pattern therein in addition to the ornamental cut portion and the color portion as described above, altogether providing a still more complicated and further sophisticated decorative pattern.

The fabric sheet as defined in claim 5 has the color portion at least partially overlapping with the ornamental cut portion and/or the indention portion described above, providing a uniquely sophisticated multiple pattern.

The fabric sheet as defined in claim 6 has at least one of its ornamental cut portion and indention portion treated by ultrasonic means, providing frayless cut edges more neatly.

The fabric sheet as defined in claim 7, has at least one of its ornamental cut portion and indention portion preembroidered with thermofusible fibers before treatment by ultrasonic means. Such a fabric sheet can provide a richly complicated and sophisticated multiple pattern. The thermofused cut edges are neat and frayless. In case the fabric sheet hem is thermofused, it is not necessary to turn up and sew the hem of the fabric sheet.

The fabric sheet as defined in claim 8 has its ornamental color portion provided by painting means, providing more stable frayless cuts than those defined in claims 1 to 7, as the paint permeated into the fibers helps hold together the fibers along the ultrasonically treated edges.

The substrate fabric of claim 1, 2, 3, 4, 5, 6, 7 or 8 is a thermofusible fabric material. Therefore, a fabric sheet (claim 9) incorporating such a substrate fabric is suitable especially for ultrasonic treatment. Exceptionally neat cut edges can be provided.

The fabric sheets treated in accordance with the present invention, when utilized in garments or others, can improve the product overall ornamentality and market value, and will promote sale of the products.

## Claims

1. An ornamental fabric sheet comprising a substrate fabric having an ornamental cut portion and a color portion, wherein said ornamental cut portion comprises at least one ornamental cut opening and/or cut line, and said color portion at least partially overlaps with said ornamental cut portion.

2. An ornamental fabric sheet according to claim 1, wherein said ornamental cut portion is provided by ultrasonic cutter means.

3. An ornamental fabric sheet according to claim 1 or 2, wherein said ornamental cut portion is provided by ultrasonic cutter treatment after the cutting portion is at least partially embroidered with thermofusible fiber material.

4. An ornamental fabric sheet comprising a substrate fabric having an ornamental cut portion, an ornamental indention portion, and an ornamental color portion.

5. An ornamental fabric sheet comprising a substrate fabric having an ornamental cut portion, an ornamental indention portion, and an ornamental color portion, said ornamental color portion being at least partially overlapping with said ornamental cut portion and said ornamental indention portion.

6. An ornamental fabric sheet according to claim 4 or 5, wherein at least one of said ornamental cut portion and said ornamental indention portion is treated by ultrasonic cutter means.

7. An ornamental fabric sheet according to claim 4, 5, or 6, wherein at least one of said ornamental cut portion and said ornamental indention portion is ultrasonically treated after the cutting portion is at least partially embroidered with thermofusible fiber material.

8. An ornamental fabric sheet according to any one of claims 1-7, wherein said ornamental color portion is provided by applying paint on said substrate fabric.

9. An ornamental fabric sheet according to any one of claims 1-8, wherein said substrate fabric is a thermofusible material.
